# EUROPEAN PATENT SPECIFICATION

(11) **EP 0 489 216 B1**
(45) Date of publication and mention of the grant of the patent: **16.04.1997**
(21) Application number: 90630210.4
(22) Date of filing: 05.12.1990
(51) Int. Cl.: C08L 21/00, C08G 18/08

(54) **High modulus rubber compositions**
Kautschukmischung mit hohem Elastizitätsmodul
Composition de caoutchouc à module élevé

(43) Date of publication of application: 10.06.1992
(73) Proprietor: THE GOODYEAR TIRE & RUBBER COMPANY, Akron, Ohio 44316-0001 (US)
(72) Inventor: Tung, William C.T., Tallmadge, OH 44278 (US); Callander, Douglas David, Akron, OH 44313 (US); Hsu, Wen-Liang, Copley, Ohio 44321 (US); Halasa, Adel Farhan, Bath, Ohio 44210 (US); Burlett, Donald James, Wadsworth, OH 44281 (US); Kelley, Mellis Michael, Akron, OH 44314 (US)
(74) Representative: Leitz, Paul

(56) References cited:
- DE-B- 1 118 447
- FR-A- 1 187 648
- FR-A- 1 576 887
- FR-A- 2 508 046

## Description

### Background of the Invention

It is sometimes desirable to increase the modulus of rubber compounds. For instance, it is generally desirable to increase the modulus of rubber compounds which are utilized in tire tread base compositions and in tire wire coat compounds. A higher degree of stiffness in such rubber compositions is conventionally attained by incorporating larger amounts of fillers, such as carbon black, into the rubber compounds and/or by increasing the state of cure of such compounds. Unfortunately, both of these techniques lead to undesirable results. For instance, the incorporation of additional carbon black into rubber compounds typically leads to high levels of hysteresis. Accordingly, the utilization of such compounds in tires results in excessive heat build-up and poor cut growth characteristics. The utilization of high amounts of sulfur to attain a high state of cure typically leads to poor-aging resistance. Furthermore, it is highly impractical to reach high levels of stiffness by increased state of cure alone. For these reasons, it is not possible to attain the desired degree of stiffness in tire tread base compounds by simply adding higher levels of fillers or curatives.

FR-A-2,508, 046, FR-B-1,576,887, and DE-B-1,118,447 relate to techniques for synthesizing polyureas and polyurethanes within rubbers. FR-A-2,508,046 discloses a technique whereby a diisocyanate is reacted with a primary diamine in the presence of cis-1,4-polyisoprene rubber. Its teachings disclose methods of reacting the diisocyanate with a diamine by both solid-phase and liquid-phase methods.

### Summary of the Invention

The subject invention reveals a technique for preparing a high modulus rubber composition which comprises polymerizing at least one diisocyanate with at least one member selected from the group consisting of diols and diamines within the matrix of at least one dry rubbery elastomer to produce said high modulus rubber composition, wherein said process is carried out by (1) mixing the diisocyanate in a first portion of the rubber, (2) mixing the diol or diamine in a second portion of the rubber, and (3) mixing the rubber containing the diisocyanate with the rubber containing the diol or diamine.

Preferred embodiments of the invention are described in the dependent claims.

The high modulus rubber compositions made by this technique are well suited for applications where a high degree of stiffness is desired. However, rubber compositions made by this technique do not have an increased degree of hysteresis.

### Detailed Description of the Invention

Virtually any type of elastomer can be utilized in preparing the high modulus rubber compositions of this invention. The rubbery elastomers which are utilized in accordance with this invention typically contain repeat units which are derived from diene monomers, such as conjugated diene monomers and/or nonconjugated diene monomers. Such conjugated and nonconjugated diene monomers typically contain from 4 to 12 carbon atoms and preferably contain from 4 to 8 carbon atoms. Some representative examples of suitable diene monomers include 1,3-butadiene, isoprene, 2,3-dimethyl-1,3-butadiene, 2-methyl-1,3-pentadiene, 3,4-dimethyl-1,3-hexadiene, 4,5-diethyl-1,3-octadiene, and phenyl-1,3-butadiene. The polydiene rubber can also contain repeat units which are derived from various vinyl aromatic monomers, such as styrene, 1-vinylnaphthalene, 2-vinylnaphthalene, α-methylstyrene, 4-phenylstyrene and 3-methylstyrene. Some representative examples of polydiene rubbers that can be modified by utilizing the high modulus rubber compositions of this invention include polybutadiene, styrene-butadiene rubber (SBR), synthetic polyisoprene, natural rubber, isoprene-butadiene rubber, isoprene-butadiene-styrene rubber, nitrile rubber, carboxylated nitrile rubber, and EPDM rubber. The technique of this invention is particularly well suited for utilization in modifying natural rubber, synthetic polyisoprene, and cis-1,4-polybutadiene.

The elastomers utilized in the high modulus rubber compositions of this invention can be made by solution polymerization, emulsion polymerization or bulk polymerization. It is, of course, also possible to use natural rubber in preparing the rubber compositions of this invention. The manner by which the dry rubbery elastomer was synthesized is not of great importance.

Virtually any type of diisocyanate monomer can be utilized. These diisocyanate monomers will typically have the structural formula:

O=C=N-A-N=C=O

wherein A represents an alkylene, cycloalkylene, arylene or cycloarylene moiety. Some representative examples of diisocyanate monomers which can be employed include 1,6-hexamethylene diisocyanate, 4,4'-methylene diphenyl diisocyanate, toluene diisocyanate, naphthalene diisocyanate, and isophorone diisocyanate. Isophorone diisocyanate is also known as 5-isocyanato-1-(isocyanatomethyl)-1,3,3-trimethylcyclohexane and has the structural formula:

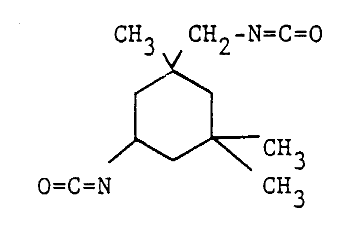

Virtually any type of diamine monomer can be used. Some representative examples of diamine monomers which can be utilized include ethylene diamine, phenylene diamine, 1,6-hexanediamine, naphthalyne diamines, 1,4-butylene diamine, piperazine and hydrazine. By the same token, any diol monomer can be used. Some representative examples of diol monomers which can be employed include ethylene glycol, butylene glycol, neopentyl glycol, cyclohexane dimethanol and 1,6-hexanediol. Small amounts of polyiisocyanates, polyamines, or polyols can be copolymerized into the polymer to cause cross-linking. In some cases, it is desirable to utilize an aromatic diamine because of the generally fast reaction rate which is attained. Fast reaction rates are particularly desirable in cases where the polyurea or polyurethane is being synthesized within the matrix of a dry rubber.

In the practice of this invention, the polyiisocyanate is dispersed into a first portion of dry rubber. The diol monomer or diamine monomer is blended into a second portion of the rubber. The two components can then be blended so as to mix the rubber containing the diisocyanate with the rubber containing the diol or diamine monomer. This procedure also results in the production of a highly dispersed blend of polyurethane or polyurea within the matrix of the dry rubber.

The polyurea or polyurethane can be synthesized in the rubber matrix over a wide temperature range.

The temperature at which the polymerization is conducted is typically within the range of 60°C to 200°C. It is preferred for such polymerizations to be conducted at a temperature within the range of 100°C to 160°C with it being most preferred for the polymerization to be done at a temperature within the range of 120°C to 140°C.

The polymerization is carried out while the rubber and monomers are being subjected to mechanical shearing forces. Typically the polymerization will be carried out in an extruder or a mixer which is capable of providing sufficiently high shearing forces so as to homogeneously disperse the monomers throughout the dry rubber. Banbury mixers and Brabender mixers are very suitable for utilization in this procedure.

## Claims

1. A process for preparing a high modulus rubber composition which comprises polymerizing at least one diisocyanate with at least one member selected from the group consisting of diols and diamines within the matrix of at least one dry rubbery elastomer to produce said high modulus rubber composition, wherein said process is carried out by (1) mixing the diisocyanate in a first portion of the rubber, (2) mixing the diol or diamine in a second portion of the rubber, and (3) mixing the rubber containing the diisocyanate with the rubber containing the diol or diamine.

2. A process as specified in claim 1 wherein said rubbery elastomer is polybutadiene.

3. A process as specified in claim 1 wherein said rubbery elastomer is polyisoprene.

4. A process as specified in claim 1 wherein said rubbery elastomer is styrene-butadiene rubber.

5. A process as specified in claim 1 wherein said rubbery elastomer is styrene-isoprene-butadiene rubber.

6. A process as specified in claim 1 wherein said members selected form the group consisting of diols and diamines are diols.

7. A process as specified in claim 1 wherein said members selected from the group consisting of diols and diamines are diamines.

## Patentansprüche

1. Verfahren zur Herstellung einer Kautschukzusammensetzung mit hohem Modul, welches die Polymerisation mindestens eines Diisocyanats mit mindestens einem aus der Gruppe bestehend aus Diolen und Diaminen ausgewählten Mitglied in der Matrix mindestens eines trockenen kautschukartigen Elastomers umfaßt, um die Kautschukzusammensetzung mit hohem Modul herzustellen, worin das Verfahren durch (1) Einmischen des Diisocyanats in einen ersten Teil des Kautschuks, (2) Einmischen des Diols oder Diamins in einen zweiten Teil des Kautschuks und (3) Mischen des das Diisocyanat enthaltenden Kautschuks mit dem das Diol oder Diamin enthaltenden Kautschuk durchgeführt wird.

2. Verfahren nach Anspruch 1, worin das kautschukartige Elastomer Polybutadien ist.

3. Verfahren nach Anspruch 1, worin das kautschukartige Elastomer Polyisopren ist.

4. Verfahren nach Anspruch 1, worin das kautschukartige Elastomer Styrol-Butadien-Kautschuk ist.

5. Verfahren nach Anspruch 1, worin das kautschukartige Elastomer Styrol-Isopren-Butadien-Kautschuk ist.

6. Verfahren nach Anspruch 1, worin die aus der Gruppe bestehend aus Diolen und Diaminen ausgewählten Mitglieder Diole sind.

7. Verfahren nach Anspruch 1, worin die aus der Gruppe bestehend aus Diolen und Diaminen ausgewählten Mitglieder Diamine sind.

## Revendications

1. Procédé pour préparer une composition de caoutchouc à module élevé, qui comprend le fait de polymériser au moins un diisocyanate avec au moins un membre choisi parmi le groupe constitué par des diols et des diamines à l'intérieur de la matrice d'au moins un élastomère caoutchouteux sec pour obtenir ladite composition de caoutchouc à module élevé, dans lequel on met en oeuvre ledit procédé par le fait de (1) mélanger le diisocyanate dans une première portion du caoutchouc, (2) mélanger le diol ou la diamine dans une seconde portion du caoutchouc et, (3) mélanger le caoutchouc contenant le diisocyanate avec le caoutchouc contenant le diol ou la diamine.

2. Procédé tel que spécifié à la revendication 1, dans lequel ledit élastomère caoutchouteux est le polybutadiène.

3. Procédé tel que spécifié à la revendication 1, dans lequel ledit élastomère caoutchouteux est le polyisoprène.

4. Procédé tel que spécifié à la revendication 1, dans lequel ledit élastomère caoutchouteux est un caoutchouc de styrène-butadiène.

5. Procédé tel que spécifié à la revendication 1, dans lequel ledit élastomère caoutchouteux est un caoutchouc de styrène-isoprène-butadiène.

6. Procédé tel que spécifié à la revendication 1, dans lequel lesdits membres sélectionnés parmi le groupe constitué par des diols et des diamines sont des diamines.

7. Procédé tel que spécifié à la revendication 1, dans lequel lesdits membres sélectionnés parmi le groupe constitué par des diols et des diamines sont des diamines.
